# FASCICULE DE BREVET EUROPEEN

(11) **EP 1 721 716 B1**
(45) Date de publication et mention de la délivrance du brevet: **09.04.2008**
(21) Numéro de dépôt: 05291022.1
(22) Date de dépôt: 12.05.2005
(51) Int. Cl.: B28B 17/02, B28C 7/00, B28C 7/08, C04B 7/52

(54) **Centrale à béton, prodédé d'approvisionement de la centrale et association de ciment avec d'autres substances**
Zentrale für die Herstellung von Beton, Verfahren zur Lieferung von dieser Zentrale, und Zusammenbringung von Zement und andere Substanzen
Station for making concrete, method for supply of such station and combination of ciment with other substances

(43) Date de publication de la demande: 15.11.2006
(73) Titulaire: LAFARGE, 75116 Paris (FR)
(72) Inventeur: Garcia, Emmanuel, 38110 Saint-Didier-de-la-Tour (FR); Levy, Christophe, 38080 Saint-Marcel Bel Accueil (FR)
(74) Mandataire: Mérigeault, Shona

(56) Documents cités:
- GB-A- 888 005
- US-A- 4 162 017
- US-A1- 2002 117 088
- US-A1- 2004 040 469

## Description

### DOMAINE TECHNIQUE

L'invention a pour objet une centrale à béton, sans silo à ciment, ainsi qu'un procédé associé de chargement de ciment sous forme agglomérée et des associations utiles de ciment.

### ARRIERE-PLAN TECHNOLOGIQUE

La granulation et la compaction du ciment et autres additifs couramment utilisés dans la préparation d'un béton sont connues pour améliorer les caractéristiques d'écoulement et/ou de manipulation. On connaît la granulation par voie solvant (ou voie humide) et par voie sèche notamment (compaction).

US-P-6,500,253 décrit un comprimé d'un liant hydraulique et un procédé de compression dit "tabletting", ainsi qu'un procédé de granulation par voie solvant avec un liant organique. Il est indiqué que cette forme agglomérée permettrait d'utiliser des procédés de manipulation mécaniques plutôt que pneumatiques pour manipuler le ciment, mais il n'y a aucune description desdits moyens mécaniques ni des applications. Le contenu technique de US-P-6,500,253 est sensiblement repris dans "Agglomeration of cement to facilitate transportation", Turton, Hakim, Stiller, Norman, Novembre 2000, AIChE Annual Meeting, Los Angeles.

FR-A-2693128 décrit un procédé de densification de poudres ultrafines, parmi lesquelles les fumées de silice et autres. Ce procédé de densification comprend l'utilisation, dans un procédé de densification de poudres ultrafines connu en soi, d'un agent de dispersion. Il est indiqué que cette technologie permet l'obtention de pellets (dont la teneur en dispersant est de 12.5% et dont la densité apparente foisonnée est de 1.5 à 1.6), et pouvant être manipulées comme le sable ou le gravier. L'application au ciment n'est clairement pas envisagée.

GB-A-888005 décrit une centrale à béton selon le préambule de la revendication 1.

Il existe cependant toujours un besoin d'un système et d'un procédé de manutention de ciment qui permette de tirer profit au maximum des qualités du ciment aggloméré.

### RESUME DE L'INVENTION

L'invention fournit donc une centrale à béton sans silo à ciment, comprenant une zone de stockage dudit ciment sous forme agglomérée anhydre dans un hangar.

Selon un mode de réalisation, La centrale à béton comprend en outre une zone de stockage à filler et/ou pouzzolane sous forme agglomérée dans un hangar. Le filler et/ou pouzzolane peut être sous forme agglomérée anhydre.

L'invention fournit aussi un procédé d'approvisionnement de la centrale selon l'invention, comprenant les étapes de:
- fourniture par un camion-benne comprenant ledit ciment sous forme agglomérée anhydre; et
- déchargement dudit camion-benne par versement gravitaire dans ladite zone de stockage ou dans une trémie d'alimentation de celle-ci.

L'invention fournit aussi une association de ciment sous forme agglomérée anhydre et filler et/ou pouzzolane sous forme agglomérée, ou encore une association de ciment sous forme agglomérée anhydre et additif(s) sous forme agglomérée, pour une utilisation simultanée ou séquentielle dans la fabrication de béton.

La forme agglomérée anhydre est préférée dans l'invention.

Les associations selon l'invention sont utiles dans les centrales à béton selon l'invention.

Enfin, l'invention fournit des procédés de fabrication de béton dans une centrale à béton selon l'invention et/ou par gâchage d'association de ciment selon l'invention.

### DESCRIPTION DE MODES DE REALISATION DE L'INVENTION.

L'invention est maintenant décrite plus en détails dans la description qui suit.

L'invention est basée sur l'utilisation de zones de stockage dans les centrales à béton qui utilisent les qualités des produits agglomérés. En particulier, l'invention vise à s'affranchir, en tout ou partie, des investissements massifs dus aux zones de stockage, notamment des silos de stockage de ciment.

Dans une centrale à béton classique, le ciment (ainsi que les autres matières pulvérulentes comme la fumée de silice, les pouzzolanes, les laitiers de hauts-fourneaux, cendres volantes, fillers calcaires, etc.) sont stockés dans des silos, tandis que le sable et les agrégats sont stockés au sol, en tas, sur des aires séparées, généralement abritées, dans des hangars, etc.. Les produits sont manipulés par voie pneumatique dans le premier cas des matières pulvérulents tandis que les produits sont chargés mécaniquement (par ex. au godet) dans le second cas des sables et agrégats. Par ailleurs, les silos représentent un coût en investissement très élevé, ce qui fait que leur nombre est limité. Ainsi, le nombre de types de ciment susceptibles d'être utilisés dans des centrales à béton est faible.

Par ailleurs, les problèmes de manutention traditionnellement associés à certains fillers en rendent leur usage difficile dans une centrale à béton. C'est le cas de la fumée de silice. Bien que la voie sèche soit mentionnée dans FR-A-2 693 128, ce document ne fournit d'indications quant à la mise en oeuvre que pour un procédé par voie humide. Cependant, cette solution fournie dans FR-A-2 693 128 pour la voie humide n'est pas complètement satisfaisante, car les agglomérés divulgués dans ce document contiennent alors déjà de l'eau et il peut être nécessaire, selon la quantité de fumée de silice utilisée et le matériau final qui les contient, d'en tenir compte pour le calcul de la quantité d'eau de gâchage à ajouter dans les compositions.

L'invention permet de s'exonérer, pour le ciment aggloméré, du silo qui y est traditionnellement associé. "Sans silo" vise donc ce ciment qui se trouve alors dans une zone de stockage classique sous abri, mais à l'air, à savoir un hangar, comme en général les autres constituants du béton.

En utilisant des hangars plutôt que des silos, l'invention permet, à un coût moindre, d'augmenter la capacité de stockage et d'utiliser un nombre plus important de produits de natures et types différents.

Il est possible d'adjoindre les bénéfices de l'invention à une centrale à béton classique.

L'approvisionnement d'une telle centrale sans silo est alors grandement simplifié aussi. En effet, le ciment (ou les fillers/pouzzolanes) peut être transporté par un camion-benne simplement bâché. Les temps de chargement et déchargement sont alors considérablement réduit par rapport à la solution pneumatique classique. A titre de comparaison, le temps de chargement d'un camion avec récipient de type citerne est très variable, de 20 minutes à 45 minutes en fonction de la cohésion du ciment. Son déchargement à l'aide d'un système pneumatique dure entre 45 minutes et 1 heure. Un camion-benne simplement bâché chargé avec le ciment aggloméré nécessite en général moins d'environ 15 min. Le camion-benne au niveau de la centrale peut verser directement au niveau de la zone de stockage ou dans une trémie d'alimentation, un mécanisme mécanique reliant cette trémie à la zone de stockage. Le chargement/déchargement des camions étant diminué, les temps de rotation sont alors optimisés. La zone de malaxage de la centrale peut alors être alimentée en ciment par godet ou par tapis transporteur, comme pour le sable ou les autres agrégats.

Diverses formes agglomérées anhydres sont possibles. Il peut s'agir de granulés obtenus par granulation par voie humide à l'aide d'un solvant organique, ou de comprimés obtenus par compression par le procédé dit de "tabletting" (faisant emploi d'une presse à poinçons) ou par le procédé dit de bricketting (faisant emploi d'une presse à rouleaux). Tout autre procédé est aussi approprié. L'homme du métier pourra se reporter aux documents suivants: US-P-6,500,253; US-P-5,253,991; US-P-5,454,867; Interceram, Refractories materials 2003, p. 4, "Granule-production - Easy and cost-effective", P. Nold, R. Löbe, M. Müller; WO-A-2004 94056, WO-A-2003 103804; WO-A-2000 00418; "Agglomeration of cement to facilitate transportation", Turton, Hakim, Stiller, Norman, Novembre 2000, AIChE Annual Meeting, Los Angeles. Les procédés de compression sont des procédés connus de façon générale, comme par exemple le tabletting et le bricketting, ce dernier étant préféré.

La forme agglomérée non-anhydre est possible lorsque l'eau ne modifie pas le comportement, mais cette forme n'est pas préférée, et il peut être nécessaire, selon la quantité de fillers utilisée et le matériau final qui les contient, d'en tenir compte pour le calcul de la quantité d'eau de gâchage à ajouter dans les compositions.

La taille des agglomérés est très variable, et la dimension caractéristique est assez variable; toute forme est possible: granulé sphérique, anguleux, boulet, oblong, jonc, etc. De préférence, on utilise une forme de boulet, de dimensions: longueur 10 à 50 mm, largeur 10 à 50 mm et épaisseur 5 à 30 mm; ou bien des granulés de diamètre caractéristique compris par exemple entre 2 et 6 mm. Les agglomérés présenteront de préférence un faible élancement, ce qui en général diminue les phénomènes d'attrition et de génération de fines associées.

La densité apparente des agglomérés est supérieure à celle du matériau d'origine. Par exemple, alors que la densité apparente du ciment en poudre est de 1.1 g/cm³, la densité apparente des agglomérés peut alors varier de 1.1 à 1.5 g/cm³, avec facteur de densification en général compris entre 1.1 et 1.4.

Le ciment peut être choisi parmi les ciments Portland correspondant aux familles décrites dans la norme EN 197-1, types CEMI, CEMII, CEMIII, CEMIV, CEMV, les ciment alumineux, ciments sulfoalumineux, etc.

L'invention trouve aussi à s'appliquer aux fillers et/ou pouzzolanes traditionnellement associés au ciment. L'agglomération n'a pas nécessairement à être sous forme anhydre, bien que cette variante soit préférée. Ces fillers et/ou pouzzolanes sont notamment la fumée de silice, les pouzzolanes, les laitiers de hauts-fourneaux, cendres volantes, fillers calcaires, etc.

Des additifs peuvent aussi être présents dans les agglomérés de ciment. La quantité est variable, par exemple en une quantité totale inférieure ou égale à 0.5%. On peut citer: les additifs ou agents liants, les lubrifiants et les désintégrants.

Il est aussi possible d'ajouter des (super)plastifiants, (aussi désignés dispersants), et d'autres adjuvants, comme ceux définis dans la norme européenne EN 934-2.

Comme (super)plastifiant, on peut citer: mélamine formaldéhyde sulfoné, naphtalène formaldéhyde sulfoné, lignosulfonate, gluconate, résine vinylique sulfonée, dispersion de copolymères acryliques, polyphosphonate polyox, polycarboxylate polyox, etc.

Il est aussi possible d'agglomérer la plupart des additifs, de façon séparée des agglomérés de ciment (ou autre). Certains additifs sont des matières pulvérulentes à l'état natif ou certains additifs peuvent être préparés par atomisation ou autre, ce qui conduit à une poudre. Il est relativement facile d'agglomérer ce genre de poudre.

Que l'additif soit livré avec le ciment ou sous forme séparée, on préférera un procédé d'agglomération des composants par voie sèche, notamment la compression, les propriétés des additifs n'étant en général pas modifiées par ce type de procédé de compression. Des additifs sous forme agglomérée plutôt que sous forme pulvérulente pourront avantageusement éviter les phénomènes d'élutriation, à savoir l'entraînement des fines par l'air lors de la manipulation.

D'autres additifs encore peuvent être présents avec le ciment sous forme agglomérée anhydre.

L'invention vise aussi les associations de ce ciment sous forme agglomérée anhydre avec (1) filler et/ou pouzzolane sous forme agglomérée, de préférence anhydre, ou (2) additif(s) sous forme agglomérée, de préférence anhydre, ou (1) et (2), pour une utilisation simultanée ou séquentielle dans la fabrication de béton.

Enfin, l'invention fournit un procédé de fabrication de béton innovant. Ce procédé est mis en oeuvre dans la centrale à béton selon l'invention; il comprend le gâchage d'un ciment sous forme agglomérée anhydre, de préférence en association avec des composants aussi sous forme granulaire. L'invention fournit donc aussi un procédé de fabrication de béton par gâchage d'une association de ciment telle que décrite plus haut.

L'invention permet donc d'utiliser les composants du béton sous une forme qui n'est plus pulvérulente.

## Revendications

1. Centrale à béton comprenant une zone de stockage de ciment, la centrale étant sans silo à ciment, **caractérisée en ce que** la zone de stockage est dans un hangar et le ciment est sous forme granulée ou comprimée anhydre. anhydre.

2. Centrale à béton selon la revendication 1, comprenant en outre une zone de stockage à filler et/ou pouzzolane sous forme granulée ou comprimée dans un hangar.

3. Centrale à béton selon la revendication 2, dans laquelle le filler et/ou pouzzolane est sous forme granulée ou comprimée anhydre.

4. Procédé d'approvisionnement de la centrale selon l'une des revendications 1 à 3, comprenant les étapes de:
- fourniture par un camion-benne comprenant ledit ciment sous forme granulée ou comprimée anhydre; et
- déchargement dudit camion-benne par versement gravitaire dans ladite zone de stockage ou dans une trémie d'alimentation de celle-ci.

5. Association de ciment avec (1) filler et/ou pouzzolane sous forme granulée ou comprimée ou (2) additif(s) sous forme granulée ou comprimée ou (1) et (2) pour une utilisation simultanée ou séquentielle dans la fabrication de béton, **caractérisée en ce que** le ciment est sous forme granulée ou comprimée anhydre.

6. Association selon la revendication 5 dans laquelle l'additif est un adjuvant appartenant à l'une des familles de la norme EN 934-2.

7. Association selon la revendication 6, dans laquelle l'additif est un (super)plastifiant ou dispersant.

8. Association de ciment selon l'une des revendications 5 à 7, dans laquelle la forme granulée ou comprimée est anhydre.

9. Association de ciment selon l'une des revendications 5 à 8 pour une utilisation dans la centrale à béton selon l'une des revendications 1 à 3.

10. Procédé de fabrication de béton dans une centrale à béton selon l'une des revendications 1 à 3.

11. Procédé de fabrication de béton par gâchage d'une association de ciment selon l'une des revendications 5 à 9.

## Claims

1. A concrete plant comprising a storage zone of cement, the plant not having a cement silo, **characterized in that** the storage zone is a hangar and the cement is in a form of granules or dry-compacted tablets.

2. A concrete plant according to claim 1, further comprising a storage zone for filler and / or pozzolan in a form of granules or compacted tablets in a hangar.

3. A concrete plant according to claim 2, wherein the filler and/or pozzolan is in a form of granules or compacted tablets.

4. A process of delivery at the plant according to any one of claims 1 to 3, comprising the stages of:
- delivery by a skip comprising the aforesaid cement in a form of granules or dry-compacted tablets; and
- unloading the aforesaid skip by gravity feed in the aforesaid storage zone or in its feeding tremie.

5. An association of cement with (1) filler and/or pozzolan in a form of granules or compacted tablets or (2) additive(s) in a form of granules or dry-compacted tablets or (1) and (2) for a simultaneous or sequential utilization in the production of concrete, **characterized in that** the cement is in a form of granules or dry-compacted tablets.

6. An association according to claim 5 wherein the additive is an admixture belonging to any one of the families in the EN 934-2 standard.

7. An association according to claim 6, wherein the additive is a (super)plasticizer or dispersant.

8. An association of cement according to any one of claims 5 to 7, wherein in the form of granules or compacted tablets is dry.

9. An association of cement according to any one of claims 5 to 8, for a use at the concrete plant according to any one of claims 1 to 3.

10. A manufacturing process of concrete at a concrete plant according to any one of claims 1 to 3.

11. A manufacturing process of concrete by mixing an association of cement according to any one of claims 5 to 9.

## Patentansprüche

1. Betonwerk, umfassend eine Zementspeicherzone, wobei das Betonwerk keinen Zementsilo aufweist, **dadurch gekennzeichnet, dass** die Speicherzone sich in einer Halle befindet und der Zement in granulierter oder verdichteter wasserfreier Form vorliegt.

2. Betonwerk nach Anspruch 1, umfassend außerdem eine Speicherzone für Füllstoff und/oder Puzzolan in granulierter oder verdichteter Form in einer Halle.

3. Betonwerk nach Anspruch 2, bei dem der Füllstoff und/oder das Puzzolan in granulierter oder verdichteter wasserfreier Form vorliegt.

4. Verfahren zur Versorgung des Betonwerks nach einem der Ansprüche 1 bis 3, umfassend die Schritte der:
- Belieferung durch einen Kipplastwagen, der den Zement in granulierter oder verdichteter wasserfreier Form umfasst; und
- Entladen des Kipplastwagens durch Ausschütten durch Schwerkraft in die Speicherzone oder in einen Versorgungsbehälter dieser Zone.

5. Kombination von Zement mit (1) Füllstoff und/oder Puzzolan in granulierter oder verdichteter Form oder (2) Zusatz bzw. Zusätzen in granulierter oder verdichteter Form oder (1) und (2) für eine gleichzeitige oder sequenzielle Verwendung bei der Betonherstellung, **dadurch gekennzeichnet, dass** der Zement in granulierter oder verdichteter wasserfreier Form vorliegt.

6. Kombination nach Anspruch 5, bei der der Zusatz ein Zusatzmittel ist, das zu einer der Familien der Norm EN 934-2 gehört.

7. Kombination nach Anspruch 6, bei der der Zusatz ein (Super-)Plastifizierungsmittel oder Dispersionsmittel ist.

8. Zementkombination nach einem der Ansprüche 5 bis 7, bei der die granulierte oder verdichtete Form wasserfrei ist.

9. Zementkombination nach einem der Ansprüche 5 bis 8 für eine Verwendung in einem Betonwerk nach einem der Ansprüche 1 bis 3.

10. Verfahren zur Herstellung von Beton in einem Betonwerk nach einem der Ansprüche 1 bis 3.

11. Verfahren zur Herstellung von Beton durch Mischen einer Zementkombination nach einem der Ansprüche 5 bis 9.
